# EUROPEAN PATENT SPECIFICATION

(11) **EP 2 728 603 B1**
(45) Date of publication and mention of the grant of the patent: **09.01.2019**
(21) Application number: 12803901.3
(22) Date of filing: 21.02.2012
(51) Int. Cl.: H01H 31/00, H01H 31/32, H01H 33/42, H01H 1/38, H01H 33/64

(54) **3-WAY SWITCH FOR A GAS-INSULATED APPARATUS**
DREIWEGSCHALTER FÜR EINE GASISOLIERTE VORRICHTUNG
INTERRUPTEUR À TROIS VOIES POUR APPAREIL ISOLÉ AU GAZ

(30) Priority: 28.06.2011 KR 20110063221
(43) Date of publication of application: 07.05.2014
(73) Proprietor: Hyundai Electric & Energy Systems Co., Ltd., Jongno-gu Seoul (KR)
(72) Inventor: LEE, Chul-Ho, Ulsan 682-807 (KR)
(74) Representative: Mounteney, Simon James
(86) International application number: PCT/KR2012/001298
(87) International publication number: WO 2013/002472

(56) References cited:
- EP-A1- 2 178 099
- JP-A- H10 285 729
- KR-A- 20050 098 360
- KR-A- 20050 098 360
- KR-B1- 100 347 363
- KR-Y1- 200 321 221
- KR-Y1- 200 321 221

## Description

### [Technical Field]

The present invention relates to a current transformer mounting structure for a gas-insulated switchgear (GIS), and more particularly, to a 3-way switch for a gas-insulated apparatus capable of reducing a driving radius and size of a device by converting rotational motion into linear motion to achieve neutrality, disconnection switching, and earthing switching.

### [Background Art]

In general, a GIS includes a gas circuit breaker (GCB), a disconnecting switch (DS), an earthing switch (ES), a lightning arrester, and a main bus which are main components of a transformer substation. The GIS has internally excellent insulation performance and is filled with an inert sulfur hexafluoride (SF6) gas, thereby accommodating the size reduction and safety of the transformer substation.

Although the DS and the ES among the above-described devices perform open and close operations of a contact point using independent operating mechanisms, an integrated DS/ES operating mechanism capable of operating the DS and the ES with one operating mechanism because of simplification of a structure, economy, simplicity of control, etc. has recently been proposed.

The DS/ES operating mechanism of the related art connects a lever, a link, and ES/DS operating elements to a rotation axis using pins, and simultaneously moves the ES/DS operating elements during an operation.

However, because the GIS of the related art has a problem in that a size of a device increases when a driving radius of the device increases, there is a need for an operating method for solving the problem.

In JP-10285729, an airtight container containing a rotatable mechanism of rods and levers to alternately open or close a grounding switch and a disconnector is driven by an external rotating rod. In detail a 3-way switch for a gas-insulated apparatus is shown, comprising: a pressure container having a space part therein, the pressure container including a first connecting part in an upper portion of the space part and a second connecting part in a side portion of the space part such that the second connecting part is perpendicular to the first connecting part; a support conductor provided in the space part, the support conductor having a first guide hole and a second guide hole formed perpendicular to the first guide hole; a disconnecting switch operating part slidably disposed inside the first guide hole, the operating part being connected to or separated from the first connecting part by means of an insertion into or extrusion from the first connecting part;an earthing switch operating part slidably disposed inside the second guide hole, the earhing switch operating part being connected to or separated from the second connecting part through an insertion into or protrusion from the second connecting part; a main lever, one end of which is rotatably coupled to the support conductor, and the other end of which is rotatably connected to both the other end of the first connecting lever and the other end of the second connecting lever.

In KR-200321221, a gas insulating container uses a mechanism consisting of two rods and a hinge to alternately open and close a grounding switch and disconnecting switch.

In KR-20050098360, an airtight container uses a mechanism consisting of two rods and hinge attached to a rotary shaft to open and close a grounding switch and a disconnecting switch.

### [Disclosure]

### [Technical Problem]

The present invention has been made to solve the above-described problem and an object of the invention is to provide a 3-way switch for a gas-insulated apparatus in which a main lever which rotatably moves according to an external force switches an operating part to linear motion to achieve neutrality, disconnection switching, and earthing switching, thereby reducing a driving radius and size of a device.

### [Technical Solution]

One aspect of the present invention provides a 3-way switch for a gas-insulated apparatus according to independent claim 1.

Preferably, the 3-way switch for the gas-insulated apparatus may further include: rotatable connecting rollers provided in connection portions between the first and second connecting levers and the main lever. Preferably, a rotation angle of the main lever may be 90°.

Preferably, the main lever may be coupled to one end of an insulation rod which is connected to an external operating machine and transfers a turning force, and the insulation rod may have one end of an axial direction coupled to the main lever in a state in which the one end is rotatably coupled to the support conductor and the other end rotatably coupled in a state in which the other end has passed through outside the pressure container.

### [Advantageous Effects]

The present invention has an advantageous effect in that a main lever which rotatably moves switches an operating part to linear motion to achieve neutrality, disconnection switching, and earthing switching, thereby reducing a driving radius and size of a device.

### [Description of Drawings]

FIG. 1A is a diagram illustrating an installation state of a 3-way switch for a gas-insulated apparatus according to the present invention.
FIG. 1B is an enlarged view illustrating a circled portion marked by B in FIG. 1A.
FIG. 2 is a front sectional view illustrating a neutral state of the 3-way switch for the gas-insulated apparatus according to the present invention.
FIG. 3 is a first operating state diagram illustrating a disconnecting switch coupling state of the 3-way switch for the gas-insulated apparatus according to the present invention.
FIG. 4 is a second operating state diagram illustrating an earthing switch coupling state of the 3-way switch for the gas-insulated apparatus according to the present invention.

### [Modes of the Invention]

Hereinafter, preferred exemplary embodiments of the present invention will be described in detail with reference to the accompanying drawings.

The terminologies used in the descriptions of the present invention are chosen based on the functions of corresponding elements of the present invention. Therefore, the terminologies used in the descriptions of the present invention are not committed to limit the technical elements of the present invention.

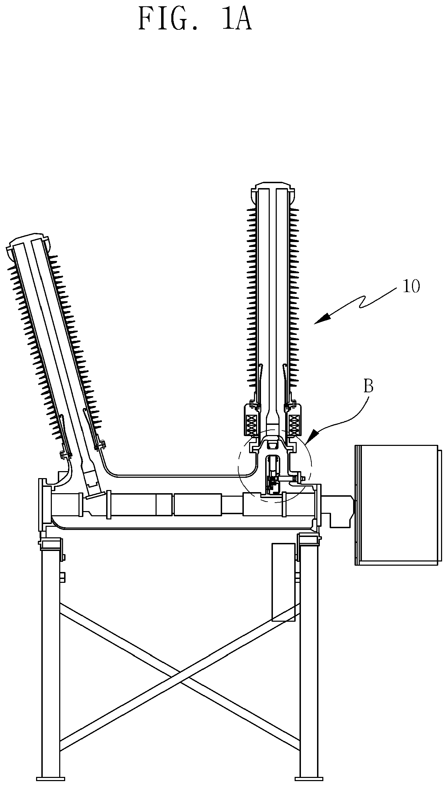

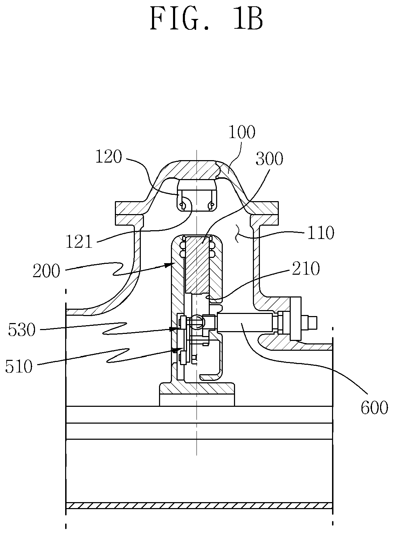

As illustrated in FIGS. 1A to 4, a 3-way switch for a gas-insulated apparatus according to the present invention is designed so that a main lever which rotatably moves switches an operating part to linear motion to achieve neutrality, disconnection switching, and earthing switching, thereby reducing a driving radius and size of a device.

For this, the 3-way switch for the gas-insulated apparatus according to the present invention includes a pressure container 100, a support conductor 200, a disconnecting switch (DS) operating part 300, an earthing switch (ES) operating part 400, and a main lever 500.

First, the pressure container 100 is fixedly installed in the gas-insulated apparatus 10, and a space part 110 is formed so that given pressure can be internally maintained. A first connecting part 120 is provided in an upper portion of the space part 110, and a second connecting part 130 is provided in a side portion of the space part 110 so that the second connecting part 130 is perpendicular to the first connecting part 120.

The first connecting part 120 has a lower end on which a first insertion groove 121 is formed so that one length-direction end of the DS operating part 300 to be described later can be inserted and connected, and the second connecting part 130 has a side end on which a second insertion groove 131 is formed so that one length-direction end of the ES operating part 400 to be described later can be inserted and connected. Here, the first connecting part 120 and the second connecting part 130 may be provided to project to the space part of the pressure container 100.

The support conductor 200 is fixedly provided in the space part 110. The support conductor 200 has a first guide hole 210 defined in a direction parallel to the direction of the first connecting part 120 and a second guide hole 220 defined in a direction parallel to the direction of the second connecting part 130.

The DS operating part 300 is vertically slidably coupled to the first guide hole 210 in a state in which the DS operating part 300 has been inserted within the first guide hole 210. The DS operating part 300 is opened and closed by the connection to or separation from the first connecting part 120 through an insertion into or extrusion from an upper portion of the first guide hole 210.

The ES operating part 400 is slidably coupled to the second guide hole 220 in a state in which the ES operating part 400 has been inserted into the second guide hole 220 such that the ES operating part 400 is perpendicular to the DS operating part. That is, the ES operating part 400 is opened and closed by the connection to or separation from the second connecting part 130 through an insertion into or extrusion from a side portion of the second guide hole 220.

Also, the DS operating part 300 has one end which is opposite to a direction of the first connecting part 120 and rotatably connected to one end of a first connecting lever 510 through a first rotatable connecting roller 530. The other end of the first connecting lever 510 is rotatably connected to the main lever 500.

The ES operating part 400 has one end which is opposite to a direction of the second connecting part 130 and rotatably connected to one end of a second connecting lever 520 through a second rotatable connecting roller 530'. The other end of the second connecting lever 520 is rotatably connected to the main lever 500.

In addition, the rotatable connecting rollers 530, 530' are provided in connection portions among the first connecting lever 510, the second connecting lever 520 and the main lever 500. It is preferable for a rotation angle of the main lever 500 to be 90°.

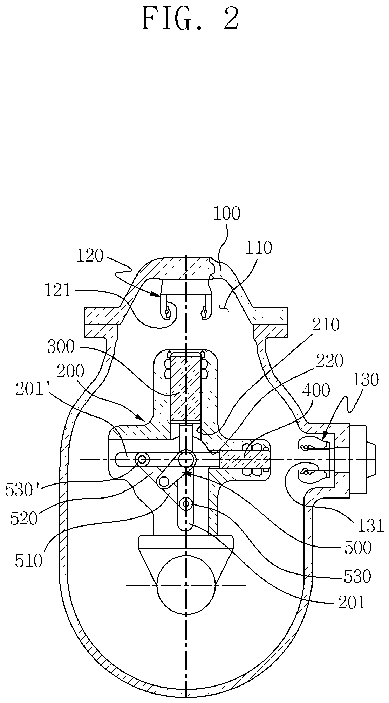

The main lever 500 has one end which is rotatably coupled to the support conductor 200 and the other end which is eccentrically rotated and rotatably connected to the DS operating part 300 and the ES operating part 400, as described above and shown in FIG. 2.

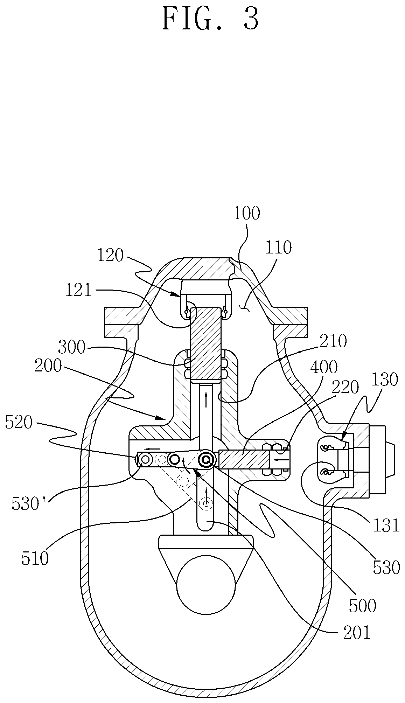

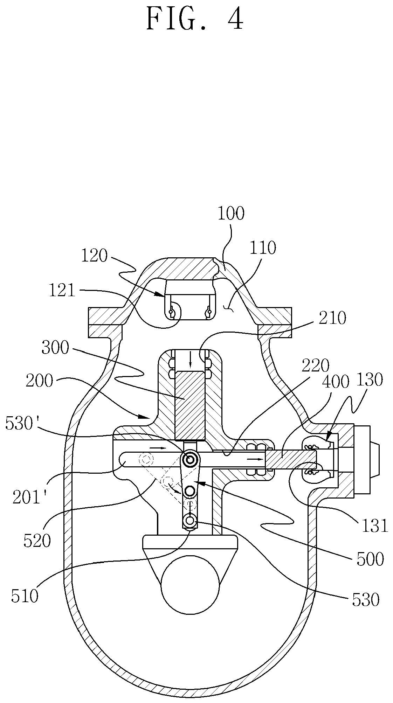

That is, the main lever 500 is maintained in a neutral position as illustrated in FIG. 2, or linearly slides the DS operating part 300 and the ES operating part 400 as in FIGS. 3 and 4.

On the other hand, the main lever 500 is coupled to one end of an insulation rod 600 which is connected to an external operating machine and transfers a turning force. Here, the insulation rod 600 has one end of an axial direction coupled to the main lever 500 in a state in which the one end is rotatably coupled to the support conductor 200 and the other end rotatably coupled in a state in which the other end has passed through outside the pressure container 100.

Hereinafter, an operation sequence of the 3-way switch for the gas-insulated apparatus according to the present invention will be described with reference to FIGS. 3 and 4.

First, an operation of the DS operating part 300 as in FIG. 3 will be described. When the insulation rod 600 connected to the outside in a neutral state is rotated at a given angle in a clockwise direction, the main lever 500 connected thereto is rotated and the first connecting lever 510 rotatably connected to the main lever 500 allows the connecting roller 530 to be driven upwardly and linearly along a first groove 201 formed in the support conductor 200. The first groove 201 is formed in parallel with the first guide hole 210.

At this time, the first connecting lever 510 upwardly pushes the DS operating part 300, so that switching to a DS coupling state is performed. A DS opening operation is performed in opposite order.

Next, an operation of the ES operating part 400 as in FIG. 4 will be described. When the insulation rod 600 connected to the outside in the neutral state is rotated at a given angle in a counterclockwise direction, the main lever 500 connected thereto is rotated and the second connecting lever 520 rotatably connected to the main lever 500 allows the second connecting roller 530' to be driven to the right side and linearly along a second groove 201' formed in the support conductor 200. The second groove 201' is formed in parallel with the second guide hole 220.

The first groove 201 and the second groove 201' are formed in perpendicular with each other.

At this time, the second connecting lever 520 pushes the ES operating part 400 to one side, so that switching to an ES coupling state is performed. An ES opening operation is performed in opposite order.

Consequently, according to the present invention, the main lever 500 which rotatably moves according to an external force switches an operating part to linear motion to achieve neutrality, disconnection switching, and earthing switching, thereby reducing a driving radius and size of a device.

Although the present invention for a 3-way switch for a gas-insulated apparatus has been described along with the accompanying drawings, this only illustrates preferred exemplary embodiments but not limits the scope of the present invention.

Accordingly, it will be apparent for those skilled in the art that various modifications and imitations of dimensions, shapes, structures, etc. may be made without departing from the scope of the present invention.

### [Industrial Applicability]

The present invention can be efficiently applied to a 3-way switch for a gas-insulated apparatus in which a main lever which rotatably moves according to an external force switches an operating part to linear motion to achieve neutrality, disconnection switching, and earthing switching, thereby reducing a driving radius and size of a device.

## Claims

1. A 3-way switch for a gas-insulated apparatus, comprising:
a pressure container (100) having a space part (110) therein, the pressure container (100) including a first connecting part (120) in an upper portion of the space part (110) and a second connecting part (130) in a side portion of the space part (110) such that the second connecting part (130) is perpendicular to the first connecting part (120);
a support conductor (200) provided in the space part (110), the support conductor (200) having a first guide hole (210) and a second guide hole (220) formed perpendicular to the first guide hole (210);
a disconnecting switch (DS) operating part (300) slidably disposed inside the first guide hole (210), the DS operating part (300) being connected to or separated from the first connecting part (120) by means of an insertion into or extrusion from the first connecting part (120);
an earthing switch (ES) operating part (400) slidably disposed inside the second guide hole (220), the ES operating part (400) being connected to or separated from the second connecting part (130) through an insertion into or protrusion from the second connecting part (130);
a first groove (201) linearly extended from the first guide hole (210), a first rotatable roller (530) slidably disposed in the first groove (201) and connected to the DS operating part (300) to slidably and linearly move therewith, and a first connecting lever (510), one end of which is rotatably connected to the first rotatable connecting roller (530);
a second groove (201') linearly extended from the second guide hole (210), the second groove (201') being perpendicular to the first groove (201), a second rotatable roller (530') slidably disposed in the second groove (201') and connected to the ES operating part (400) to slidably and linearly move therewith, and a second connecting lever (520), one end of which is rotatably connected to the second rotatable connecting roller (530'); and
a main lever (500), one end of which is rotatably coupled to the support conductor (200), and the other end of which is rotatably connected to both the other end of the first connecting lever (510) and the other end of the second connecting lever (520).

2. The 3-way switch for the gas-insulated apparatus of claim 1, wherein a rotation angle of the main lever (500) is 90°.

3. The 3-way switch for the gas-insulated apparatus of claim 1,
wherein the main lever (500) is coupled to one end of an insulation rod (600) which is connected to an external operating machine and transfers a turning force, and
wherein the insulation rod (600) has one end of an axial direction coupled to the main lever (500) in a state in which the one end is rotatably coupled to the support conductor (200) and the other end rotatably coupled in a state in which the other end has passed through outside the pressure container (100).

## Patentansprüche

1. Dreiwegschalter für eine gasisolierte Vorrichtung, der Folgendes umfasst:
einen Druckbehälter (100), der einen Raumteil (110) in demselben aufweist, wobei der Druckbehälter (100) einen ersten Verbindungsteil (120) in einem oberen Abschnitt des Raumteils (110) und einen zweiten Verbindungsteil (130) in einem Seitenabschnitt des Raumteils (110) derart einschließt, das der zweite Verbindungsteil (130) senkrecht zu dem ersten Verbindungsteil (120) ist,
einen Trägerleiter (200), der in dem Raumteil (110) bereitgestellt wird, wobei der Trägerleiter (200) ein erstes Führungsloch (210) und ein zweites Führungsloch (220), das senkrecht zu dem ersten Führungsloch (210) geformt ist, aufweist,
einen Trennschalter- (DS-) Betätigungsteil (300), der verschiebbar innerhalb des ersten Führungslochs (210) angeordnet ist, wobei der DS-Betätigungsteil (300) mit Hilfe eines Einschiebens in den ersten Verbindungsteil (120) oder Herausdrückens aus demselben mit dem ersten Verbindungsteil (120) verbunden oder von demselben getrennt wird,
einen Erdungsschalter- (ES-) Betätigungsteil (400), der verschiebbar innerhalb des zweiten Führungslochs (220) angeordnet ist, wobei der ES-Betätigungsteil (400) mit Hilfe eines Einschiebens in den zweiten Verbindungsteil (130) oder Herausdrückens aus demselben mit dem zweiten Verbindungsteil (130) verbunden oder von demselben getrennt wird,
eine erste Rille (201), die sich linear von dem ersten Führungsloch (210) aus erstreckt, eine erste drehbare Rolle (530), die verschiebbar in der ersten Rille (201) angeordnet und mit dem DS-Betätigungsteil (300) verbunden ist, um sich verschiebbar und linear mit demselben zu bewegen, und einen ersten Verbindungshebel (510), dessen eines Ende mit der ersten drehbaren Rolle (530) verbunden ist,
eine zweite Rille (201'), die sich linear von dem zweiten Führungsloch (220) aus erstreckt, wobei die zweite Rille (201') senkrecht zu der ersten Rille (201) ist, eine zweite drehbare Rolle (530'), die verschiebbar in der zweiten Rille (201') angeordnet und mit dem ES-Betätigungsteil (400) verbunden ist, um sich verschiebbar und linear mit demselben zu bewegen, und einen zweiten Verbindungshebel (520), dessen eines Ende mit der zweiten drehbaren Rolle (530') verbunden ist, und
einen Haupthebel (500), dessen eines Ende drehbar mit dem Trägerleiter (200) verbunden ist und dessen anderes Ende drehbar mit sowohl dem anderen Ende des ersten Verbindungshebels (510) als auch dem anderen Ende des zweiten Verbindungshebels (520) verbunden ist.

2. Dreiwegschalter für die gasisolierte Vorrichtung nach Anspruch 1, wobei ein Drehungswinkel des Haupthebels (500) 90° beträgt.

3. Dreiwegschalter für die gasisolierte Vorrichtung nach Anspruch 1,
wobei der Haupthebel (500) mit einem Ende einer Isolationsstange (600) verbunden ist, die mit einer externen Betätigungsmaschine verbunden ist und eine Drehkraft überträgt, und
wobei die Isolationsstange (600) ein Ende einer axialen Richtung hat, das, in einem Zustand, in dem das eine Ende drehbar mit dem Trägerleiter (200) verbunden ist, mit dem Haupthebel (500) verbunden ist, wobei das andere Ende in einem Zustand, in dem das andere Ende den Druckbehälter (100) aussen passiert hat, drehbar verbunden ist.

## Revendications

1. Interrupteur à trois voies pour un appareil isolé au gaz, comprenant :
un récipient sous pression (100) comportant une partie d'espace (110), le récipient sous pression (100) incluant une première partie de connexion (120) dans une partie supérieure de la partie d'espace (110), et une deuxième partie de connexion (130) dans une partie latérale de la partie d'espace (110), de sorte que la deuxième partie de connexion (130) est perpendiculaire à la première partie de connexion (120) ;
un conducteur de support (200) agencé dans la partie d'espace (110), le conducteur de support (200) comportant un premier trou de guidage (210) et un deuxième trou de guidage (220) formé perpendiculairement au premier trou de guidage (210) ;
une partie d'actionnement (300) d'un sectionneur (DS) disposée de manière coulissante à l'intérieur du premier trou de guidage (210), la partie d'actionnement du DS (300) étant connectée à la première partie de connexion (120) ou séparée de celle-ci par l'intermédiaire d'une insertion dans la première partie de connexion (120) ou d'une extrusion de celle-ci ;
une partie d'actionnement (400) d'un sectionneur de mise à la terre (ES) disposée de manière coulissante à l'intérieur du deuxième trou de guidage (220), la partie d'actionnement du ES (400) étant connectée à la deuxième partie de connexion (130) ou séparée de celle-ci par l'intermédiaire d'une insertion dans la deuxième partie de connexion (130) ou d'une saillie de celle-ci ;
une première rainure (201), s'étendant de manière linéaire à partir du premier trou de guidage (210), un premier rouleau rotatif (530) disposé de manière coulissante dans la première rainure (201) et connecté à la partie d'actionnement du DS (300) en vue d'un déplacement coulissant et linéaire avec celle-ci, et un premier levier de connexion (510), dont une extrémité est connectée de manière rotative au premier rouleau de connexion rotatif (530) ;
une deuxième rainure (201') s'étendant de manière linéaire à partir du deuxième trou de guidage (210), la deuxième rainure (201') étant perpendiculaire à la première rainure (201), un deuxième rouleau rotatif (530') disposé de manière coulissante dans la deuxième rainure (201') et connectée à la partie d'actionnement du ES (400), en vue d'un déplacement coulissant et linéaire avec celle-ci, et un deuxième levier de connexion (520), dont une extrémité est connectée de manière rotative au deuxième rouleau de connexion rotatif (530') ; et
un levier principal (500), dont une extrémité est accouplée de manière rotative au conducteur de support (200), et dont l'autre extrémité est connectée de manière rotative à l'autre extrémité du premier levier de connexion (510) et à l'autre extrémité du deuxième levier de connexion (520).

2. Interrupteur à trois voies pour l'appareil isolé au gaz selon la revendication 1, dans lequel un angle de rotation du levier principal (500) correspond à 90°.

3. Interrupteur à trois voies pour l'appareil isolé au gaz selon la revendication 1,
dans lequel le levier principal (500) est accouplé à une extrémité d'une tige d'isolation (600) qui est connectée à une machine d'actionnement externe et assure le transfert d'une force de rotation ; et
dans lequel la tige d'isolation (600) comporte une extrémité d'une direction axiale accouplée au levier principal (500) dans un état dans lequel ladite une extrémité est accouplée de manière rotative au conducteur de support (200), l'autre extrémité étant accouplée de manière rotative dans un état dans lequel l'autre extrémité a traversé à l'extérieur le récipient sous pression (100).
